Europäisches Patentamt

European Patent Office

Office européen des brevets

(19)

(11) Publication number: **0 166 481**
A2

(12)

# EUROPEAN PATENT APPLICATION

(21) Application number: 85200906.7

(22) Date of filing: 10.06.85

(51) Int. Cl.⁴: **C 01 B 33/02, C 22 B 34/10**

(30) Priority: 26.06.84 US 624575

(43) Date of publication of application: 02.01.86
Bulletin 86/1

(84) Designated Contracting States: **AT BE CH DE FR GB IT LI LU NL SE**

(71) Applicant: **AGIP S.p.A., Piazzale E. Mattei 1, I-00144 Rome (IT)**
Applicant: **ANIC S.p.A., Via Ruggero Settimo, 55, I-90139 Palermo (IT)**

(72) Inventor: **Sanjurjo, Angel, 15010 Penitencia CK Rd, San Jose, CA 95132 (US)**
Inventor: **Sancier, Kenneth M., 561 Berkeley Avenue, Menlo Park, CA 94025 (US)**

(74) Representative: **Roggero, Sergio et al, Ing. Barzanò & Zanardo Milano S.p.A. Via Borgonuovo 10, I-20121 Milano (IT)**

(54) Process for obtaining silicon or transition metals from their halides.

(57) A novel process is described for the production of silicon or a transition metal from the corresponding halide.

0166481

A process for the production of low cost, highly pure silicon and group IVB transition metals (Ti,Zr, and Hf) described in U.S. 4.442,082, which is incorporated by reference.

That process is primarily exemplified by the disclosure of specific reactions that produce silicon.

It is known that elements such as silicon or transition metals of more than sufficient purity can be produced economically from the metallic reduction of their halides. Preferably in regard to the present process, the element is silicon and in that case silicon fluoride is prepared from an aqueous solution of fluosilicic acid, a low cost waste by-product of the phosphate fertilizer industry by treatment with a metal fluoride which precipitates the corresponding fluosilicate. This salt is filtered, washed, dried and thermally decomposed to produce the corresponding silicon tetrafluoride and metal fluoride which can be recycled to the precipitation step. The silicon tetrafluoride is then reduced by a suitable reducing metal and the reaction product which comprises elemental silicon is treated to extract the silicon.

For the case of transition metals, their halides can be reduced by metals from the groups IA, IIA, and IIIA. The reaction product consist of an elemental transition metal plus the halide of the corresponding reducing metal. For example $TiF_4$ can be reduced with Ca to form Ti metal and $CaF_2$.

The process in one form is described in detail in an article entitled Silicon of Sodium Reduction of Silicon Tetrafluoride authored by A. Sanjurjo, L.Narris, K. Sancier, R. Bartlett and V.J.Kapur in the Journal of

the Electrochemical Society, Vol. 128, No. 1, January 1981 and the subject matter of that article is specifically incorporated herein by reference.

The present invention is directed to the part of the process which deals with the manner of continuously or intermittently removing the products of reaction, that is silicon and sodium fluoride, that are produced by the reaction between silicon tetrafluoride and an alkali (group IA) or alkaline earth metal (group IIA) metal such as sodium from a reactor or container and the subsequent separation of elemental silicon.

In order to appreciate the problem of carrying out the reaction consider (as noted above) that when liquid Na at temperatures above 150°C contacts $SiF_4$, a rapid exothermic reaction takes place. The Na burns in the $SiF_4$ atmosphere to produce Si and NaF. Since Na melts at 98°C, in principle, liquid Na at temperatures below 140°C can safely be drop-fed into a reactor kept under a constant $SiF_4$ pressure. The reaction takes place at the bottom of the reactor which is kept at temperatures above 200°C.

Further, the reaction products produced by the systems disclosed in the patents are in a form that is difficult to remove from the reactor or container in which they are formed or stored. In view of the stringent purity requirements for solar grade silicon, removal techniques that tend to introduce impurities are distinctly disadvantageous.

The present invention is specifically concerned with separation of the reaction products produced by reaction of Na and $SiF_4$. The reaction is performed in

0166481

a container configured in such a manner that at least a portion of the sodium fluoride is melted and removed from the reaction mixture.

The present invention is concerned with an improved process for the recovery of elements such as silicon, titanium, zirconium or hafnium from a reaction mixture which containes a metal halide and the elemental form of Si or the transition metal. The process comprises recovering free silicon, titanium, zirconium or hafnium from a mixture comprising a metal halide and elemental silicon, titanium, zirconium or hafnium, by the use of the steps of:

(a) heating said mixture to a temperature that is sufficient to liquify at least a portion of the metal halide;

(b) removing from said container with gravitational force the mixture; and

(c) separating elemental silicon, titanium, zirconium or hafnium from the mixture.

Accordingly, it is a primary object of this invention to provide an improved process for the removal of a mixture of silicon a transition metal and a metal halide from a container and the subsequent recovery of silicon or a transition metal.

It is also an object of this invention to provide an improved process for the sequential partial separation of a reaction mixture containing a semiconductor or transition metal and metal halide and the removal of such a reaction mixture from a reactor or a container.

It is also an object of this invention to provide an improved process for the removal of a reaction mixture of silicon or a transition metal, and a metal halide from a reactor which is operated continuously or intermittently.

These and other objects of the invention will become apparent from a review of the present specification.

FIG. 1 is a cross-sectional view of a tiltable reactor that may be utilized in the practice of the invention.

FIG. 2 is a cross-section continuous flow reactor that may be utilized in the practice of the invention.

The improved process of the invention may be practiced in any suitable apparatus that provides a heat-resistant container to receive or hold the reaction mixture obtained from the reduction reaction of an Si halide or transition metal halide reactant with a reducing metal.

When a reaction mixture such as that of sodium fluoride and silicon is formed, it is difficult to remove such a mixture from a reactor or container because it tends to adhere to the walls and bottom.

The apparatus should be columnar in shape having a round cross-section, i.e. a cylinder, or an ovoid, rectangular square, hexagonal, or the like cross-section. The apparatus should be provided with means to open the reactor such as a removable section which when removed exposes a full cross- section of the columnar apparatus to permit removal of the reaction mixture even if it is in the form of a plug which substantially fills a portion of the columnar section of the apparatus. An alternate embodiment may comprise means whereby the apparatus is opened along its longitudinal axis. Another alternate embodiment may comprise a columnar structure where the bottom cross-section has a surface area larger than the top cross-section.

The apparatus may be an integral zone of a reactor in which the reduction reaction takes place or it may be a separate apparatus which is used only as a separator.

The apparatus is preferably cylindrical in shape although, as noted above, other shapes may be used. The process utilizes heat to liquify a portion of the reaction mixture and allow the reaction mixture to slide out of the reactor due to the melting of part of the reaction mixture adjacent to the side walls. The removable section in the apparatus may be located at the top or bottom of the apparatus. If it is located at the top means will be provided on the apparatus to invert it and allow the contents to be removed by gravity after a sufficient amount of heat is applied to liquify a portion of the contents.

The process also includes the use of a suitable means in an apparatus that will permit selective separation of a portion of the alkali metal fluoride.

When the reaction mixture comprises sodium fluoride and elemental silicon, the process may be advantageously operated to take advantage of the fact that the melting point of sodium fluoride is 988°C and the melting point of elemental silicon is about 1410°C. When this type of a reaction mixture is heated to about 1000-1400°C or more preferably 1100-1200°C the sodium fluoride becomes a low viscosity fluid which can unexpectedly be selectively drawn off by gravity through a suitable opening to remove a substantial portion of the sodium fluoride that is formed in this reaction (NaF:Si, 6:1 by weight). The opening may be one or a plurality of orifices that are of a sufficient size to selectively permit flow of the liquid sodium fluoride while retaining the elemental silicon. The orifices may be in the form of holes or a grate or other perforated sections with round holes. A diameter of 1 mm to 1 cm may be used although a diameter of 2-5mm is preferred. When a portion of the sodium fluoride is withdrawn in this manner, a sponge type product comprising sodium fluoride and silicon in a ratio of less than 6:1 by weight is obtained.

The preferred manner of applying heat to the apparatus is by radio frequency induction although, if desired, electrical resistance heating and the like may be utilized.

A rapid heating rise is desirable to provide a "flash" effect when discharging the complete contents of the reactor. The flash effect causes the liquification of all or a portion of the reaction mixture adjacent to the side walls of the apparatus so that gravity alone will permit the contents to slide out. Temperatures of from 1000-1800°C may be used on the walls of the reactor, preferably 1000-1400°C and more preferably from 1000-1200°C. The rate of temperature increase will be selected to obtain the removal of the contents of the apparatus in a reasonable period of time. The substantially pure sodium fluoride may be recycled upstream in an integrated production facility to serve as a source for sodium fluoride that is used to make sodium fluosilicate. The purity of the recycled sodium fluoride is a specific advantage that can be utilized in the making of sodium fluosilicate.

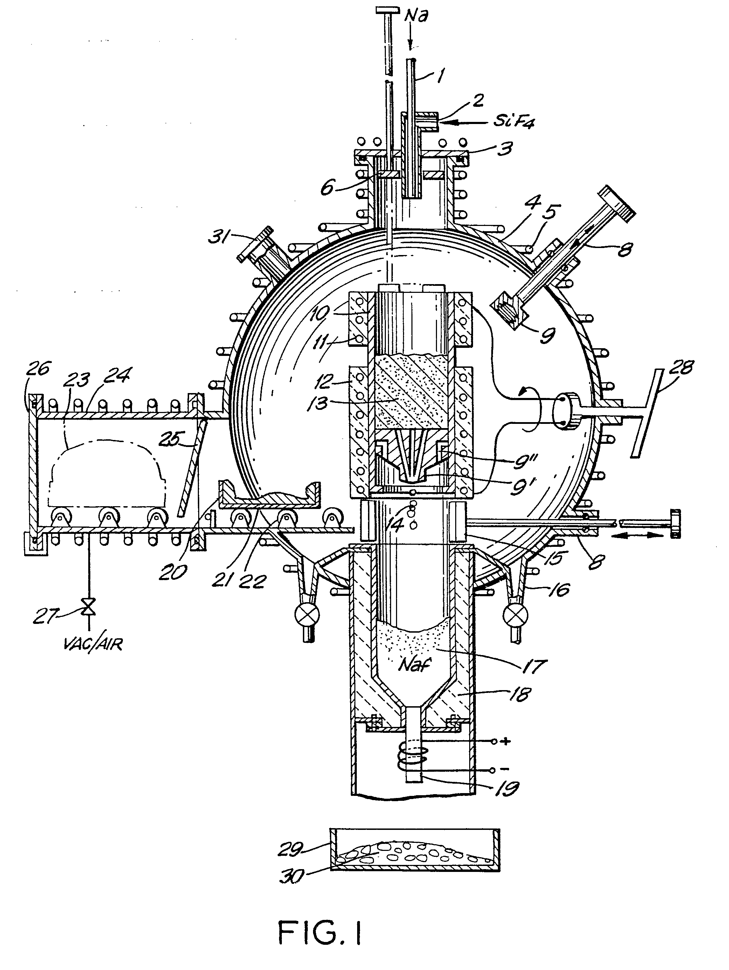

A cross-section of continuous tiltable reactor is shown in FIG. 1. It is provided with liquid sodium inlet 1 and silicon tetrafluoride gas inlet 2, and a top flange 3 with copper seals 3A. The reactor shell 4 is preferably made of stainless steel and is provided with cooling coils 5. An adjustable shield 6 and plunger is shown in its raised position and in phantom 7 in its closed position when it is lowered to close the reactor. A seal 8 is provided on the shaft of the reactor closure fitting 9. The reactor closure fitting 9 may be manipulated to cover the bottom plug 9' of the reactor which is provided with holes for drainage of the sodium fluoride. Bottom plug 9' is supported by shelf 9" in reactor cylinder 10 which is preferably made of graphite or silicon carbide. Radio frequency heating coils 11 are provided on the upper end of reactor 10 to heat the reactor. Insulation layer 12 which may be made of silica or graphite felt is placed around reactor cylinder 10. The reactor products (RP) 13 collect in the reactor cylinder 10. When sodium and silicon tetrafluoride are the reactants, the RP consists of a 6:1 mixture by weight of sodium fluoride and silicon. Molten sodium fluoride 14 is collected in temporary storage vessel 17, which is provided with heated and insulated mantle 18, prior to withdrawal. Removable electrically heated sleeve 15 is used to provide sufficient heat to keep the sodium fluoride in the molten state. Vents 16 are provided to discharge any RP powder that may escape into the reactor shell 4. Valve 19 which is provided with a heater is used to discharge molten sodium fluoride into receiver pan 29 as sodium fluoride 30.

A receiver 20 mounted on casters 22 is used to collect RP discharged from reactor cylinder 10 when said reactor cylinder is in the inverted position. A cold layer of crushed RP is shown in receiver 20 as a means for preventing adhesion of molten RP to the receiver surface. A phantom view 23 of receiver 20 is shown in removal chamber 24 which has interior gas tight door 25 and exterior gas tight door 26. A gas system is provided at valve 27 to permit the RP to cool in the presence of vacuum or argon. A handle 28 is provided for rotating the reactor and radio frequency coil assembly. It is to be understood that the axis of rotation for handle is such that the reactor closure fitting 9 may be aligned and positioned with bottom plug 9.

The first step in starting the reactor is to heat the reactor 10, the sleeve 15, and the receiver 18 to between 1000°C and 1400°C, preferably between 1100°C and 1200°C. The heater 19 is adjusted to a temperature below 1000°C so that molten NaF will not drain out of receptacle 18. The movable radiation shield 7 is in the upper position, the reactor 10 is in the vertical orientation (mouth upward), the sleeve 15 is positioned so that its cylindrical axis is aligned with that of the reactor 10. The system is evacuated, and then filled with $SiF_4$ through nozzle 2 to slightly above atmospheric pressure.

The reaction is started by permitting liquid Na to pass through orifice 1, and the $SiF_4$-Na reaction will occur on the hot surface of the plug 9'. As the reaction proceeds, the molten NaF will drain through the holes in the plug 9' and fall into the receptacle 18. This liquid NaF can be drained out into the receiver 29 by raising the temperature of the heater 19 in the range of 1000°C to 1400°C, but preferably in the range of 1050°C to 1200°C. The molten Naf can be collected as a liquid that is cooled in the receiver 29 or cooled as droplets to solid droplets before hitting the receiver.

When the reactor is sufficiently full with an enriched slurry of Si in NaF (about 1:2 by weight), the flow of Na is stopped in preparation to discharging the slurry from the reactor. This is performed by (1°) moving the sleever 15 and lifting the shield 6 to clear the diameter of the reactor, (2) rotating the reactor so that the slurry can empty into the receiver 20, and (3) if the slurry does not empty rapidly, push the plug 9' with the plunger 9 until the slurry is completely removed from the reactor. The reactor is then readied for another charging (1) by pulling plug 9' back in position by retracting plunger 9, (2) disengaging the plunger 9 from the plug 9', (3) returning sleeve 15 to its original position, and (4) if necessary, clean the throat of the reactor of any deposits by momentarily ramming plunger 7 downward to engage the top section of the reactor 10. The reaction can be started again as soon as the temperature of the reactor parts have returned to the original values. Temperature can be measured by an optical pyrometer through a window 31 in the reactor shell (a shutter should be provided to cover the window and protect it from dust deposits until the temperature readings are taken).

The receiver for the molten slurry RP should first be prepared with a coating of cold reaction products (from a previous run) to avoid adhesion of the molten slurry to the receiver 20. Once the receiver 20 is filled with the molten slurry, perhaps accomodating several discharge steps of the reactor, the receiver can be moved through the gate door 25 to the new position 23 where the RP can cool in an inert atmosphere (Ar) or in vacuum. Finally, the cooled products are withdrawn from the system through gate door 26.

The following information is relevant to the rate of Na addition and the amount of RP that can be produced. If the inner dimensions of the reactor are 8 cm ID and 20 cm high, the Na can be added at a rate in the range of 5 to 50 g/min, and we have had experience with an addition rate of 10 g/min. Since the RP weighs 2.13 times that of the Na, and the theoretical density of the slurry is about 2, the reactor will be about half full when it contains about 800 g of RP (Si/NaF ratio of 1:6 by weight), which requires 375 g Na for the reaction. Also, experience shows that the molten NaF has a viscosity about that of water, and easily flows out of the above RP leaving a slurry that is concentrated in Si (Si/NaF ratio of about 1:2 by weight). With this amount of NaF leaving the reactor, it will be possible to react another 375 g Na to produce another 800 g RP before the reactor is half full. Thus, a total of 750 g Na will produce 1600 g RP, but the reactor will be only half full if the molten NaF is allowed to drain out. The time for this filling for a flow rate of Na of 10 g/min is 75 min (750/10=75),and a shorter time if the Na addition rate can be increased to larger values.

The reactor should be operated at as low a temperature (above 1000°C) as possible to avoid excessive vapor or dust transport to the larger volume of the reactor shell 5. However, dust that does accumulate in the shell can be periodically removed through the ports 16 by blowing from inside the shell outward.

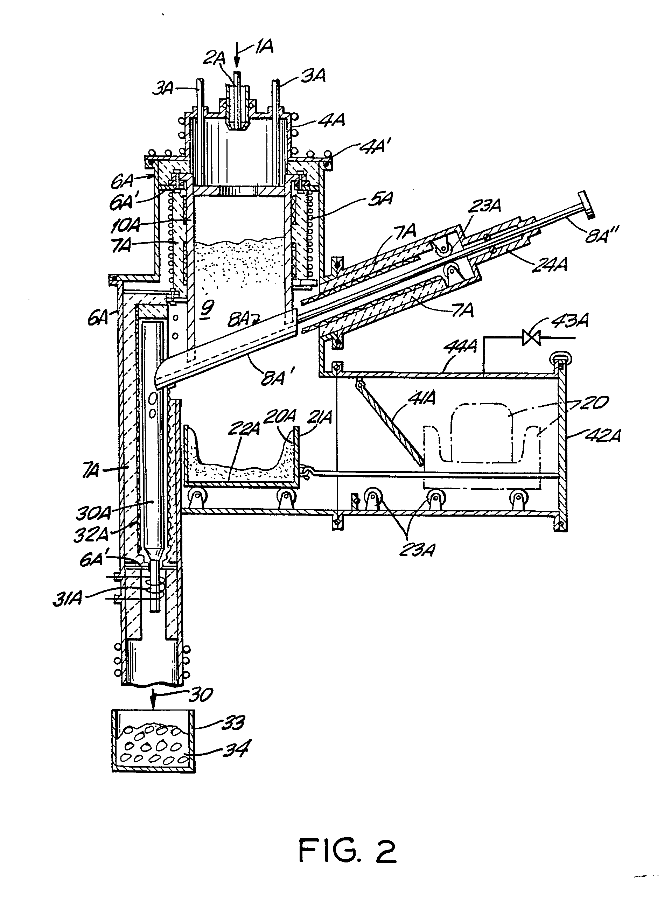

FIG. 2 is a cross-section of a continuous flow reactor according to the present invention. This reactor is provided with a sodium injection nozzle 1A,a silicon tetrafluoride injection port 2A. Baffle pusher assembly 3A is used if necessary to eject the RP. Reactor head 4A and shell 6A are preferably made of Inconel aloy. Support structure 6A' is used between the Inconel shell and the reactor with an insulating gasket. An insulating layer 7A of silica felt or graphite felt is placed around graphite reactor 10A and the receiving chamber 32A which contains molten sodium fluoride 30A. A diagonally sliding bottom plate 8A may be opened or closed to discharge the reactor while permitting, in the closed position, molten sodium fluoride to flow leaving RP 9A which is enriched in silicon. The discharged sponge like RP 20A is transferred to receiver 21A that is mounted on rollers 23A which is lined with cold reaction product 22A. Rod assembly 8A", with seal 24A is used to open and close diagonally sliding bottom plate 8A. Flange 4A' is sealed to the reactor with a copper seal.

The chamber 32A is provided with auxilliary heater valve 31A to permit molten sodium fluoride 30A to be drawn off into receiver 33A as liquid sodium fluoride 34A. Heat is provided with RF coils 5A.

A discharge compartment 44A is provided with interior gas tight door 41A and exterior gas tight door 42A to permit withdrawal of receiver 21A as shown by the phantom view.

Reactor is brought to temperature of about 1000°C, and bottom plate 8A closes bottom of reactor 10A. Liquid sodium is fed through nozzle 1A and $SiF_4$ through 2A as needed to maintain a given pressure (1.1 atmospheres). The molten NaF will drain through the hole 10B provided at the end of plate 8A and heater

0166481

8A', and drain into the chamber 32A where it is kept molten until drained out of heated valve 31A. When the reactor chamber is full of reaction products (RP), which now contain Si/NaF in the ratio of about 1:2, the addition of Na is stopped, the bottom plate 8A is retracted by handle 8A" in order to completely clear the throat of the reactor and permit the RP to fall into the receiver 21A. If necessary, the downward movement of the RP can be facilitated by using the baffle-pusher assembly 3A. The bottom plate 8A is returned to close the bottom of the reactor, and the reactor is once again filled as before. When the RP receiver 21A is full, it is transported through door 41A into chamber 44A, where it is permitted to cool under vacuum to remove the $SiF_4$. When cool, the RP are removed from the chamber 44A through door 42A over rollers 23A.

The NaF 30A is stored in chamber 32A until it is sufficiently full, and then it is transferred to a container 33A. The transfer can be as a liquid or droplets that can be cooled sufficiently so they are collected as solids.

### Example 1

A mixture containing silicon and sodium fluoride was placed in a container having a round orifice with the diameter (d(cm)) set forth below:

| Experiment | Material | d(cm) | Approximate Max T°C | Comments |
|---|---|---|---|---|
| 1* | 6:1 mixture NaF & Si | 0.26 | 1450 | NaF & Si did not discharge |
| 2 | 6:1 mixture of NaF & Si | 0.32 | 1520 | 80% of the NaF discharged, Si did not. |

| Experiment | Material | d(cm) | Approximate Max T°C | Comments |
|------------|----------|-------|---------------------|----------|
| 3* | NaF | 0.1 | 1400 | NaF did not discharge |
| 4* | NaF | 0.2 | 1400 | 20% of NaF discharged |
| 5* | NaF | 0.26 | 1400 | 100% NaF discharged |

*control

The esperiments show that when a mixture of sodium fluoride and silicon having an average particle diameter of about 100 microns is heated in a container having an orifice of up to 0.32 cm in diameter near the meltingpoint of the silicon, the sodium fluoride will flow out while the silicon will be retained.

## Example 2

A 6:1 mixture by weight of silicon and sodium fluoride produced in a reactor by reduction of silicon tetrafluoride with sodium was crushed in a hydraulic press lined with polycarbonate plates. The mixture was transferred to a Grafoil TM (graphite foil) lined graphite container having a bottom orifice which varied from 1.2.cm to 0.9 cm in diameter. The container was heated to discharge a portion of the sodium fluoride.

| Run | Reactor Height (cm) | I.D.(cm) | I.D.*(cm) | Temp°C | Results |
|-----|---------------------|----------|-----------|--------|---------|
| A | 2.6 | 4.5 | 1.2 | 1400 | some sodium fluoride discharged;silicon retained |
| B | 7.5. | 3 | 1.0 | 1400 | 66% sodium fluoride discharged; silicon retained |

|     | Reactor     |          |            |         |                |
| Run | Height (cm) | I.D.(cm) | I.D.*(cm)  | Temp°C  | Results        |
| --- | ----------- | -------- | ---------- | ------- | -------------- |
| C   | 7.5         | 3        | 1.0        | 1400±20 | sodium fluoride discharged: some silicon (liquid) discharged |
| D   | 7.5         | 3.1      | 0.9        | 1000    | container was insulated with graphite-felt; 60% of sodium fluoride discharged forming a crystalline white stalagmite; silicon powder remainder on top |
| E   | 7.5         | 3.1      | 0.9        | 1200    | 43% of sodium fluoride was discharged with some silicon |

*Discharge Orifice

It can be seen that using an orifice diameter of about 1 cm, sodium fluoride may be selectively discharged between 1000°C and 1400°C. Silicon may only be discharged as a liquid at temperatures above 1410°C. This was an unexpected result that originated this application.

### Example 3

A further increase in the diameter of the orifice of discharge to 2 cm leads to condition wherein both silicon and sodium fluoride are discharged, (e.g.) using 3 CM Id. crucibles with a conical shaped orifice of discharge.

In this example the bottoms of the crucibles were deliberately plugged with salts that melt at higher temperatures than sodium fluoride, namely calcium fluoride and barium fluoride in order to permit all of the sodium fluoride to melt before discharge was initiated by melting the salt-plug. The internal walls of crucible were tapered at an angle of 130° to form the discharge opening. The rate of heating was also recorded to determine if this parameter had an effect on the discharge.

| | | Reactor (cm) | | | Approx. | Heating | |
|---|---|---|---|---|---|---|---|
| Run | Plug | Height | Diameter | Orifice | Temp °C | Rate (°C/min) | Results |
| A | $CaF_2$ | 7.5 | 3 | 2 | 1410 | 75 | some silico and sodium fluoride discharged |
| B | $BaF_2$ | 7.5 | 3 | 1 | 1200-1400 | 39 | sodium fluoride discharged; silicon retained |
| C | $BaF_2$ | 7.5 | 3 | 1 | 1410 | 31 | sodium fluoride discharged; silicon retained |
| D | $BaF_2$ | 7.5 | 3 | 2 | 1410 | 15 | sodium fluoride and silicon discharged |

## Example 4

A run was carried out in a cylindrical reactor to show the efficiency of rapidly discharging the reaction mixture

0166481

using a flash heating method. A powder mixture with a
1:6 weight ratio of silicon to sodium fluoride was
loaded in a cylindrical reactor (10 cm high by 5 cm in
diameter), and by raising the temperature of the
cylinder walls to 1025°C. The plug was readily removed
thus showing the technique is a practical and efficient
method of discharging these reaction mixtures from a
columnar reactor.

0166481

CLAIMS

1. In a process for the reduction of a tetrahalide of: Silicon, titanium, zirconium or hafnium, with an alkali or alkaline earth metal to obtain elemental silicon, titanium, zirconium or hafnium, the improvement which comprises recovering free silicon, titanium, zirconium or hafnium from a mixture comprising at least metal halide and free silicon titanium, zirconium or hafnium by the use of the steps of:

(a) heating said mixture in a container to a temperature to that is sufficient to liquefy at least a portion of said metal halides;

(b) removing the mixture from said container with gravitational force the mixture; and

(c) thereafter separating elemental silicon, titanium, zirconium or hafnium from said mixture.

2. The process of claim 1 wherein all of the mixture is removed in a single step.

3. The process of claim 1 a portion of the metal halide is removed initially.

4. The process of claim 1 wherein the mixture comprises sodium fluoride and silicon.

5. The process of claim 4 wherein the container has at least one orifice with a diameter of 0.1 to 1 cm.

6. The process of claim 5 wherein all of the mixture is removed in a single step.

7. The process of claim 5 wherein a portion of the sodim fluoride is removed initially.

8 . The process of claim 7 wherein a temperature of from 1000-1800°C is utilized.

9. The process of claim 8 wherein sodium fluoride is removed as a liquid.

10. The process of claim 9 wherein the container is inverted to remove the balance of the mixture.

11. An apparatus for the preparation of silicon or a transition metal from the corresponding halide, said apparatus comprising an outer shell provided with cooling means; an internal reactor with means for feeding to said reactor a halide of silicon or a halide of a transition  metal and an alkali metal; heating means for heating said reactor; inverting means for  inverting said reactor in said outer shell; means to collect liquid halide from the bottom of said reactor; means to collect and remove the reaction product from said reactor; a gas tight removal chamber for removal of reaction product and capping means to close said reactor.

FIG. I

0166481

2/2

FIG. 2